# EUROPEAN PATENT APPLICATION

(11) **EP 3 982 177 A1**
(43) Date of publication of application: **13.04.2022**
(21) Application number: 20819109.8
(22) Date of filing: 04.06.2020
(51) Int. Cl.: G02B 6/255, G16Y 10/75

(54) **FUSION SPLICING SYSTEM, SERVER, FUSION SPLICER, INFORMATION TERMINAL, AND PROJECT MANAGEMENT METHOD**

(30) Priority: 05.06.2019 JP 2019105327
(71) Applicant: Sumitomo Electric Optifrontier Co., Ltd., Yokohama-shi Kanagawa 244-8589 (JP)
(72) Inventor: OHNISHI, Takaharu, Yokohama-shi Kanagawa 244-8589 (JP); OOKI, Kazuyoshi, Yokohama-shi Kanagawa 244-8589 (JP); YUSA, Hideaki, Yokohama-shi Kanagawa 244-8589 (JP); SUZUKI, Takahiro, Yokohama-shi Kanagawa 244-8589 (JP)
(74) Representative: Hoffmann Eitle
(86) International application number: PCT/JP2020/022047
(87) International publication number: WO 2020/246530

(57) **Abstract**

A fusion splicing system includes a fusion splicer configured to perform fusion splicing of optical fibers, and a server configured to receive fusion splicing data pertaining to the fusion splicing from an information terminal capable of communicating with the fusion splicer, or the fusion splicer via a communication network. The fusion splicing data includes first identification information for identifying a project to which the fusion splicing belongs. The server retains second identification information related to a registered project registered in advance, compares the first identification information with the second identification information, and interrelates the fusion splicing data with the registered project indicated by the second identification information when the first identification information coincides with the second identification information.

## Description

### Technical Field

The present disclosure relates to a fusion splicing system, a server, a fusion splicer, an information terminal, and a project management method.

This application claims the benefit of the priority based on Japanese Patent Application No. 2019-105327, filed on June 5, 2019, the entire contents disclosed in the application is incorporated herein by reference.

### Background Art

Patent Literature 1 discloses a technology related to a fusion splicing device. This fusion splicing device includes a fusion splicer for fusion splicing between optical fibers, and a data management terminal device connected to this fusion splicer. The fusion splicer has a control processing unit and a memory unit. The control processing unit performs self-diagnosis of a function of splicing optical fibers of the fusion splicer in regard to a plurality of items in accordance with a prescribed self-diagnostic program and stores detailed data of results of the self-diagnosis in the memory unit. The control processing unit outputs the detailed data of the results of the self-diagnosis stored in the memory unit to the data management terminal device.

Patent Literature 2 discloses a technology related to an optical fiber fusion splicing device. This fusion splicing device includes a CPU and a memory and performs fusion splicing between optical fibers using a program and fusion parameters reserved in the memory. Moreover, this fusion splicing device includes a communication interface such as a USB or the Ethernet (registered trademark) and takes information from information terminal equipment connected via this communication interface in the memory.

Patent Literature 3 discloses a technology related to a fusion condition provision system. This fusion condition provision system provides fusion conditions to a fusion splicer performing fusion splicing between optical fibers and includes a storage device storing a plurality of fusion conditions, a user-side communication portion transmitting request information requesting fusion conditions required for a fusion splicer used by a user, and a data management device. The data management device transmits one or more fusion conditions of the plurality of fusion conditions in the storage device in accordance with request information received from the user-side communication portion via a network to the user-side communication portion via the network. Regarding the one or more fusion conditions transmitted to the user-side communication portion, a fusion condition requested for a user is provided from the user-side communication portion to the fusion splicer used by the user.

### Citation List

### Patent Literature

[Patent Literature 1] Japanese Unexamined Patent Publication No. 2003-287643
[Patent Literature 2] Japanese Unexamined Patent Publication No. 2004-246073
[Patent Literature 3] PCT International Publication No. WO2017/199942

### Summary of Invention

A fusion splicing system of the present disclosure includes a fusion splicer configured to perform fusion splicing of optical fibers, and a server. The server is configured to receive fusion splicing data pertaining to the fusion splicing from an information terminal capable of communicating with the fusion splicer, or the fusion splicer via a communication network. The fusion splicing data includes first identification information for identifying a project to which the fusion splicing belongs. The server retains second identification information related to a registered project registered in advance. The server compares the first identification information with the second identification information and interrelates the fusion splicing data with the registered project indicated by the second identification information when the first identification information coincides with the second identification information.

A server of the present disclosure includes a communication portion, a storage portion, and a collation portion. The communication portion is configured to receive fusion splicing data from an information terminal capable of communicating with a fusion splicer performing fusion splicing of optical fibers or the fusion splicer via a communication network. The fusion splicing data is fusion splicing data pertaining to the fusion splicing and includes first identification information for identifying a project to which the fusion splicing belongs. The storage portion is configured to retain second identification information related to a registered project registered in advance. The collation portion is configured to compare the first identification information with the second identification information and interrelate the fusion splicing data with the registered project indicated by the second identification information when the first identification information coincides with the second identification information.

A fusion splicer of the present disclosure is a fusion splicer performing fusion splicing of optical fibers and including a data generation portion and a communication portion. The data generation portion is configured to generate fusion splicing data pertaining to the fusion splicing. The fusion splicing data includes first identification information for identifying a project to which the fusion splicing belongs. The communication portion is configured to transmit the fusion splicing data to a server via a communication network. The server compares the first identification information with second identification information related to a registered project registered in advance and interrelates the fusion splicing data with the registered project indicated by the second identification information when the first identification information coincides with the second identification information.

An information terminal of the present disclosure is an information terminal capable of communicating with a fusion splicer performing fusion splicing of optical fibers. This information terminal transmits fusion splicing data pertaining to the fusion splicing to a server via a communication network. The fusion splicing data includes first identification information for identifying a project to which the fusion splicing belongs. The server compares the first identification information with second identification information related to a registered project registered in advance and interrelates the fusion splicing data with the registered project indicated by the second identification information when the first identification information coincides with the second identification information.

Another information terminal of the present disclosure includes a communication portion and a display portion. The communication portion is configured to receive aggregation data of aggregated fusion splicing data from a server. The fusion splicing data pertains to fusion splicing of a fusion splicer performing the fusion splicing of optical fibers. The display portion is configured to display the aggregation data. The aggregation data is data of the fusion splicing data aggregated for each project by comparison between first identification information and second identification information. The first identification information is included in the fusion splicing data for identifying a project to which the fusion splicing belongs. The second identification information is related to a registered project registered in advance.

A project management method of the present disclosure includes a first step and a second step. In the first step, fusion splicing data is received from an information terminal capable of communicating with a fusion splicer performing fusion splicing of optical fibers or the fusion splicer via a communication network. The fusion splicing data is fusion splicing data pertaining to the fusion splicing and includes first identification information for identifying a project to which the fusion splicing belongs. In the second step, the first identification information is compared with second identification information related to a registered project registered in advance, and the fusion splicing data is interrelated with the registered project indicated by the second identification information when the first identification information coincides with the second identification information.

### Brief Description of Drawings

FIG. 1 is a view schematically illustrating a constitution of a fusion splicing system according to an embodiment of the present disclosure.
FIG. 2 illustrates an appearance of a fusion splicer in a state in which a windshield cover is closed.
FIG. 3 illustrates an appearance of the fusion splicer in a state in which the windshield cover is opened so that an internal structure thereof can be seen.
FIG. 4 is a block diagram illustrating a functional configuration of the fusion splicer.
FIG. 5 is a block diagram illustrating a hardware configuration of the fusion splicer.
FIG. 6 is a block diagram illustrating a functional configuration of an information terminal.
FIG. 7 is a block diagram illustrating a functional configuration of another information terminal.
FIG. 8 is a block diagram illustrating a common hardware configuration of each information terminal.
FIG. 9 is a block diagram illustrating a functional configuration of a server.
FIG. 10 is a block diagram illustrating a hardware configuration of the server.
FIG. 11 is a graph conceptually showing a progress status of a project.
FIG. 12 is a flowchart showing a project management method.
FIG. 13 is a view schematically illustrating a constitution of a fusion splicing system according to another embodiment of the present disclosure.
FIG. 14 is a block diagram illustrating a functional configuration of the fusion splicer.

### Description of Embodiments

### [Problem to be solved by present disclosure]

In fusion splicing work of optical fibers, it is extremely important for a manager to understand the progress of the work, the splicing quality, and the like. The reason is that the work period is lengthened when delay of the work, rework due to low quality or the like occurs, and this leads to high costs. Hence, in the related art, a manager understands the progress of the work, the splicing quality, and the like by receiving reports related to the progress of the work, the splicing quality, and the like from a worker and aggregating the details thereof. However, there is a problem that such work may entail labor and a delay may be caused in a timing of understanding the progress and the like.

Hence, the present disclosure aims to provide a fusion splicing system, a server, a fusion splicer, an information terminal, and a project management method, in which labor involved in a manager understanding the progress of the work, the splicing quality, and the like can be reduced and the timing of such understanding can be further advanced.

### [Effects of present disclosure]

According to the present disclosure, it is possible to provide a fusion splicing system, a server, a fusion splicer, an information terminal, and a project management method, in which labor involved in a manager understanding the progress of the work, the splicing quality, and the like can be reduced and the timing of such understanding can be further advanced.

### [Description of embodiments of present disclosure]

First, embodiments of the present disclosure will be enumerated and described. The fusion splicing system according to the embodiment includes a fusion splicer configured to perform fusion splicing of optical fibers, and a server. The server is configured to receive fusion splicing data pertaining to the fusion splicing from an information terminal capable of communicating with the fusion splicer, or the fusion splicer via a communication network. The fusion splicing data includes first identification information for identifying a project to which the fusion splicing belongs. The server retains second identification information related to a registered project registered in advance. The server compares the first identification information with the second identification information and interrelates the fusion splicing data with the registered project indicated by the second identification information when the first identification information coincides with the second identification information.

The server according to the embodiment includes a communication portion, a storage portion, and a collation portion. The communication portion is configured to receive fusion splicing data from an information terminal capable of communicating with a fusion splicer performing fusion splicing of optical fibers or the fusion splicer via a communication network. The fusion splicing data is fusion splicing data pertaining to the fusion splicing and includes first identification information for identifying a project to which the fusion splicing belongs. The storage portion is configured to retain second identification information related to a registered project registered in advance. The collation portion is configured to compare the first identification information with the second identification information and interrelate the fusion splicing data with the registered project indicated by the second identification information when the first identification information coincides with the second identification information.

The fusion splicer according to the embodiment is a fusion splicer performing fusion splicing of optical fibers and including a data generation portion and a communication portion. The data generation portion is configured to generate fusion splicing data pertaining to the fusion splicing. The fusion splicing data includes first identification information for identifying a project to which the fusion splicing belongs. The communication portion is configured to transmit the fusion splicing data to a server via a communication network. The server compares the first identification information with second identification information related to a registered project registered in advance and interrelates the fusion splicing data with the registered project indicated by the second identification information when the first identification information coincides with the second identification information.

The information terminal according to the embodiment is an information terminal capable of communicating with a fusion splicer performing fusion splicing of optical fibers. This information terminal transmits fusion splicing data pertaining to the fusion splicing to a server via a communication network. The fusion splicing data includes first identification information for identifying a project to which the fusion splicing belongs. The server compares the first identification information with second identification information related to a registered project registered in advance and interrelates the fusion splicing data with the registered project indicated by the second identification information when the first identification information coincides with the second identification information.

The project management method according to the embodiment includes a first step and a second step. In the first step, fusion splicing data is received from an information terminal capable of communicating with a fusion splicer performing fusion splicing of optical fibers or the fusion splicer via a communication network. The fusion splicing data is fusion splicing data pertaining to the fusion splicing and includes first identification information for identifying a project to which the fusion splicing belongs. In the second step, the first identification information is compared with second identification information related to a registered project registered in advance, and the fusion splicing data is interrelated with the registered project indicated by the second identification information when the first identification information coincides with the second identification information.

In the fusion splicing system, the server, the fusion splicer, the information terminal, and the project management method, the fusion splicing data is received by the server (or in the first step) via the communication network. The fusion splicing data is generated in the fusion splicer for each fusion and includes, for example, a date and time of the work, estimated values for a splicing loss, kinds of optical fibers, and the like. Moreover, the fusion splicing data includes the first identification information for identifying a project to which fusion splicing belongs. When the second identification information related to the registered project registered in advance and the first identification information are compared with (collated with) each other by the server (or in the second step), it is possible to easily judge which registered project the fusion splicing data belongs to by the server (or in the second step). Further, the progress of the project, the splicing quality, and the like can be automatically aggregated by interrelating the fusion splicing data with the identified registered project. Thus, labor involved in a manager understanding the progress of the work, the splicing quality, and the like can be reduced and the timing of such understanding can be further advanced.

In the fusion splicing system, the server, the fusion splicer, the information terminal, and the project management method described above, the first identification information may be positional information of the fusion splicer or the information terminal. The second identification information may be positional information belonging to the registered project. For example, the positional information can be automatically acquired using a Global Positioning System (GPS) or the like. Therefore, the first identification information can be easily included in the fusion splicing data. In addition, since the positional information belonging to the registered project, that is, a place where fusion work is performed is predetermined, even when the fusion splicer or the information terminal is replaced, for example, the first identification information can be easily included in the fusion splicing data.

In the fusion splicing system, the server, the fusion splicer, the information terminal, and the project management method described above, the first identification information may be identification information of a worker handling the fusion splicer. The second identification information may be identification information of a worker belonging to the registered project. Alternatively, the first identification information may be identification information of the fusion splicer. The second identification information may be identification information of a fusion splicer belonging to the registered project. For example, according to these constitutions, the first identification information can be easily included in the fusion splicing data.

In the fusion splicing system, the fusion splicer, and the information terminal described above, the server may transmit aggregation data of the aggregated fusion splicing data to an information terminal different from the information terminal. The different information terminal may have a display portion displaying the aggregation data. In this case, a manager can easily understand the progress of the work, the splicing quality, and the like.

Another information terminal according to the embodiment includes a communication portion and a display portion. The communication portion is configured to receive aggregation data of aggregated fusion splicing data from a server. The fusion splicing data pertains to fusion splicing of a fusion splicer performing the fusion splicing of optical fibers. The display portion is configured to display the aggregation data. The aggregation data is data of the fusion splicing data aggregated for each project by comparison between first identification information and second identification information. The first identification information is included in the fusion splicing data for identifying a project to which the fusion splicing belongs. The second identification information is related to a registered project registered in advance. According to this information terminal, a manager can easily understand the progress of the work, the splicing quality, and the like.

### [Details of embodiment of present disclosure]

Specific examples of a fusion splicing system, a server, a fusion splicer, an information terminal, and a project management method of the present disclosure will be described below with reference to the drawings. The present invention is not limited to these examples. The present invention is indicated by the claims, and it is intended to include all changes within the meaning and the scope equivalent to the claims. In the following description, the same elements are denoted by the same reference numerals in the description of drawings, and repeated description thereof will be omitted.

### (First embodiment)

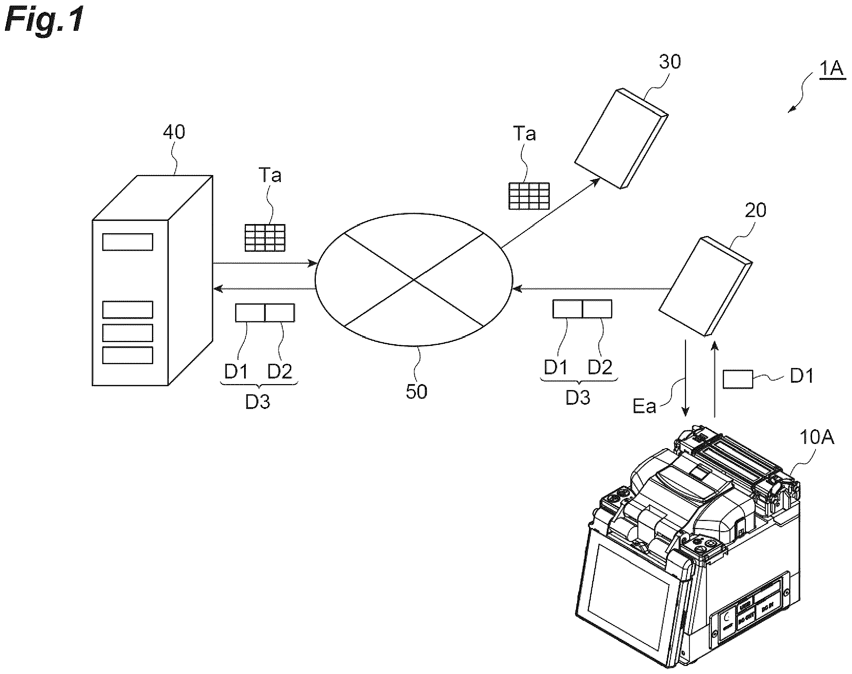

FIG. 1 is a view schematically illustrating a constitution of a fusion splicing system 1A according to an embodiment of the present invention. This fusion splicing system 1A includes a fusion splicer 10A, information terminals 20 and 30, and a server 40. The fusion splicer 10A is a device performing fusion splicing of optical fibers. The information terminal 20 is possessed by a worker using the fusion splicer 10A. For example, the information terminal 20 is a portable wireless communication terminal such as a smartphone. For example, the fusion splicer 10A is configured to be able to communicate with the information terminal 20 through wireless connection. The information terminal 30 is handled by a manager of a project using the fusion splicer 10A. For example, the information terminal 30 is a portable wireless communication terminal such as a smartphone or a fixed communication terminal such as a personal computer which can communicate. For example, the project is a work project.

The server 40 is a management server for generalizing a plurality of projects and is a computer capable of communicating with the information terminals 20 and 30 via an information communication network 50. For example, the information communication network 50 is the Internet. The server 40 is located in a certain area on the earth, and the fusion splicer 10A and the information terminals 20 and 30 are located in an area different from the area where the server 40 is located.

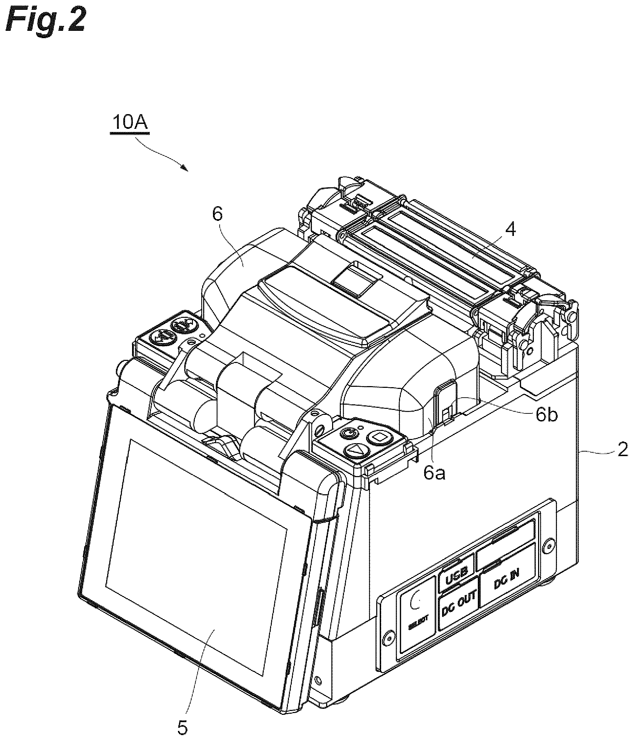

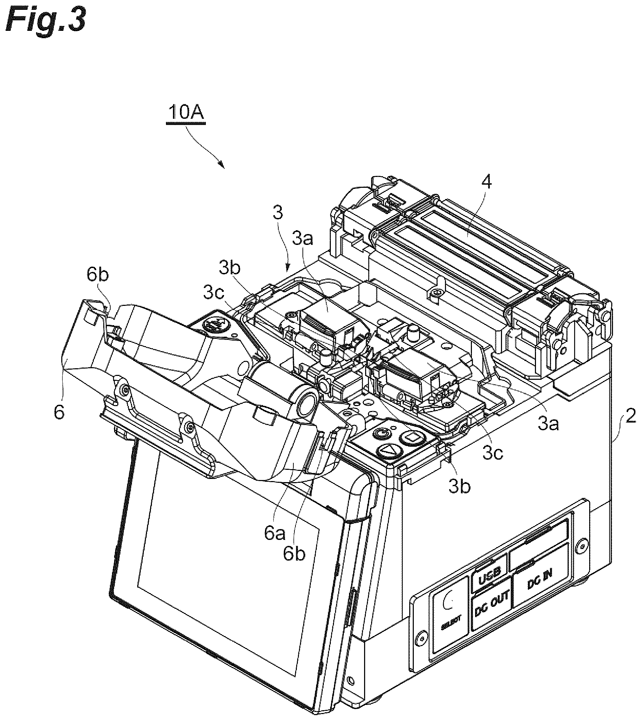

FIGS. 2 and 3 are perspective views illustrating appearances of the fusion splicer 10A. FIG. 2 illustrates an appearance in a state in which a windshield cover is closed, and FIG. 3 illustrates an appearance of the fusion splicer 10A in a state in which the windshield cover is opened so that an internal structure thereof can be seen. The fusion splicer 10A is a device for fusion splicing between optical fibers and includes a box-shaped casing 2 as illustrated in FIGS. 2 and 3. At an upper portion of this casing 2, a fusion unit 3 for fusion between optical fibers, and a heater 4 for heat-shrinking a fiber reinforcing sleeve covering a fusion-spliced portion of optical fibers fused by the fusion unit 3 are provided. The fusion splicer 10A includes a monitor 5 displaying a state of fusion splicing between optical fibers whose image is captured by a camera (not illustrated) disposed inside the casing 2. Moreover, the fusion splicer 10A includes a windshield cover 6 for preventing wind from entering the fusion unit 3.

The fusion unit 3 has a holder placement portion on which a pair of optical fiber holders 3a can be placed, a pair of fiber positioning portions 3b, and a pair of discharging electrodes 3c. Optical fibers which are targets of fusion are respectively held and fixed by the optical fiber holders 3a, and the optical fiber holders are respectively placed and fixed on the holder placement portion. The fiber positioning portions 3b are disposed between the optical fiber holders 3a and position the tip portions of optical fibers respectively held by the optical fiber holders 3a. The discharging electrodes 3c are disposed between the fiber positioning portions 3b. The discharging electrodes 3c are electrodes for fusing the tips of optical fibers by arc discharge.

The windshield cover 6 is connected to the casing 2 so as to cover the fusion unit 3 openably and closably. Introduction ports 6b for introducing optical fibers into the fusion unit 3 (that is, into the respective optical fiber holders 3a) are respectively formed on side surfaces 6a of the windshield cover 6.

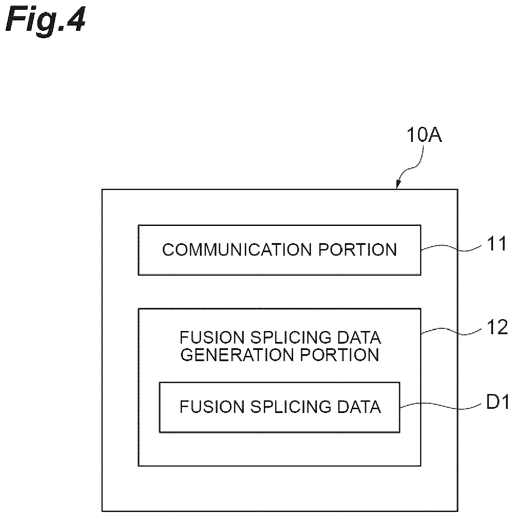

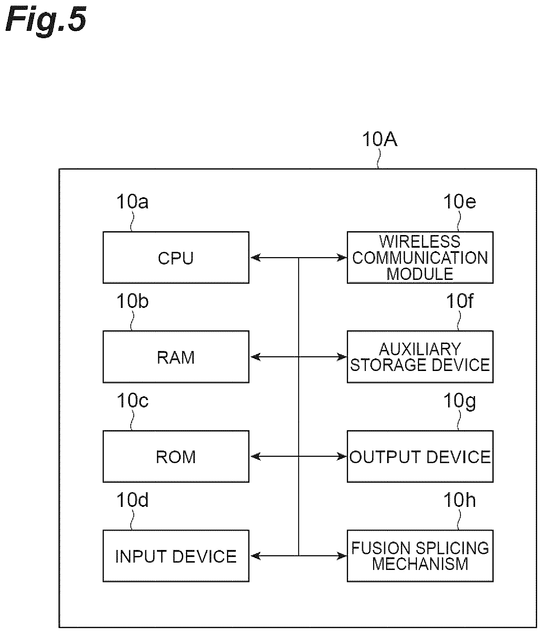

FIG. 4 is a block diagram illustrating a functional configuration of the fusion splicer 10A. FIG. 5 is a block diagram illustrating a hardware configuration of the fusion splicer 10A. As illustrated in FIG. 4, the fusion splicer 10A functionally includes a communication portion 11 and a fusion splicing data generation portion 12. As illustrated in FIG. 5, the fusion splicer 10A is configured to include a computer as a control unit thereof provided with hardware such as a CPU 10a, a RAM 10b, a ROM 10c, an input device 10d, a wireless communication module 10e, an auxiliary storage device 10f, and an output device 10g. When these constituent elements operate in accordance with a program or the like, each of the functions of the fusion splicer 10A is realized. In addition, the fusion splicer 10A includes various fusion splicing mechanisms 10h in addition to the control unit.

The communication portion 11 is a portion for performing communication with the information terminal 20. For example, the communication portion 11 performs wireless communication conforming to IEEE 802.11 (registered trademark: Wi-Fi) or IEEE 802.15.1 (registered trademark: Bluetooth) with the information terminal 20.

The fusion splicing data generation portion 12 generates first fusion splicing data D1. The first fusion splicing data D1 is automatically generated for each fusion. For example, the first fusion splicing data D1 includes a date and time of the work, estimated values for a splicing loss, kinds of optical fibers, identification numbers (IDs) of workers, the ID of the fusion splicer 10A, discharging power during fusion splicing, discharging currents, the atmospheric pressure around the fusion splicer 10A, the temperature around the fusion splicer 10A, the humidity around the fusion splicer 10A, and the like. Generation of one piece of the first fusion splicing data D1 means that fusion has been performed once. The fusion splicing data generation portion 12 transmits the generated first fusion splicing data D1 to the information terminal 20 via the communication portion 11 in response to a transmission request Ea (refer to FIG. 1) from the information terminal 20. The fusion splicing data D1 may be transmitted every time the first fusion splicing data D1 is generated. Every particular number of pieces of first fusion splicing data D1 may be transmitted collectively, or the first fusion splicing data D1 may be transmitted collectively every time interval set in advance.

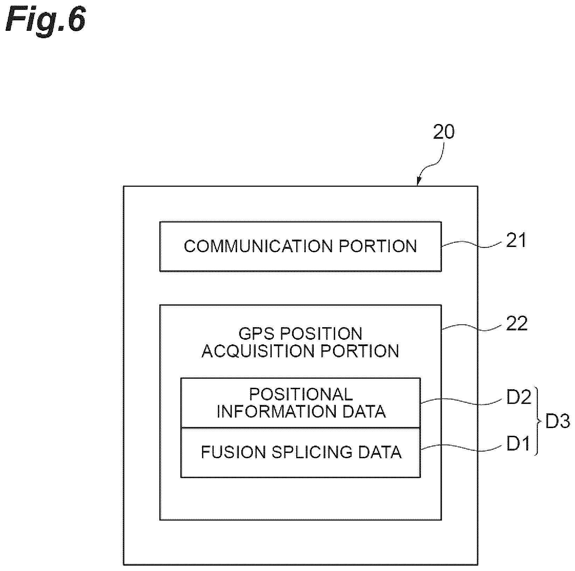

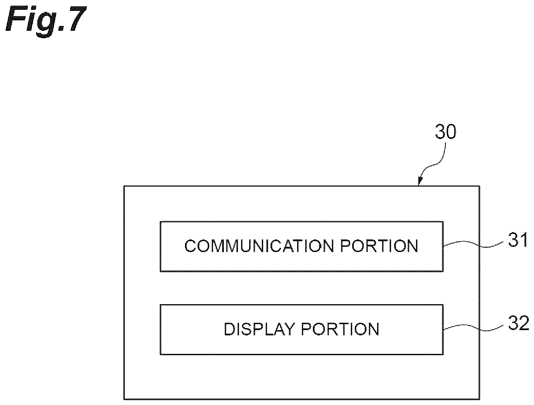

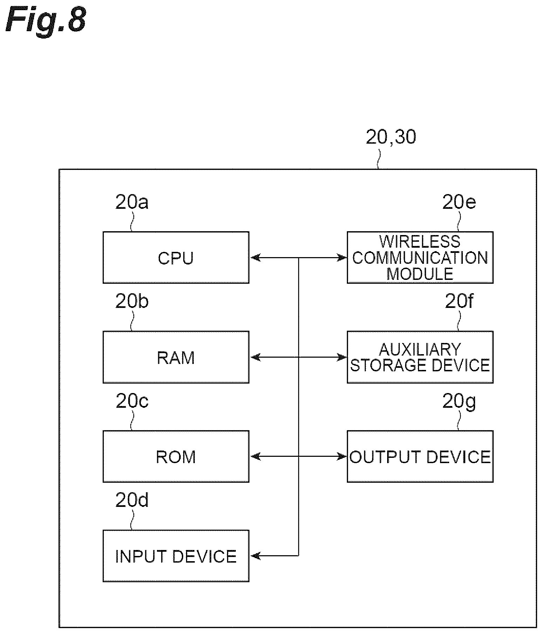

FIGS. 6 and 7 are block diagrams respectively illustrating functional configurations of the information terminals 20 and 30. FIG. 8 is a block diagram illustrating a common hardware configuration of each of the information terminals 20 and 30. As illustrated in FIG. 6(a), the information terminal 20 includes a communication portion 21 and a GPS position acquisition portion 22. As illustrated in FIG. 7, the information terminal 30 includes a communication portion 31 and a display portion 32. As illustrated in FIG. 8, each of the information terminals 20 and 30 is configured to include a computer provided with hardware such as a CPU 20a, a RAM 20b, a ROM 20c, an input device 20d, a communication module 20e, an auxiliary storage device 20f, and an output device 20g. When these constituent elements operate in accordance with a program or the like, the information terminal 20 realizes each of the functions illustrated in FIG. 6. When these constituent elements operate in accordance with a program or the like, the information terminal 30 realizes each of the functions illustrated in FIG. 7.

In the information terminal 20, for example, the communication portion 21 comprises the communication module 20e such as a wireless LAN module built into a terminal. The communication portion 21 transmits and receives various signals with respect to the fusion splicer 10A through wireless communication. The communication portion 21 performs communication conforming to IEEE 802.11 or IEEE 802.15.1, for example, corresponding to the wireless standard of the fusion splicer 10A. As long as wireless communication can be performed with the fusion splicer 10A, other bands or communication standards may be used. In addition, the communication portion 21 transmits and receives various signals to and from the server 40 via the information communication network 50 such as the Internet. On this account, the wireless LAN module described above may also serve as the communication portion 21, or a different communication module may be provided.

The GPS position acquisition portion 22 acquires positional information D2 regarding the location of the information terminal 20 including the GPS position acquisition portion 22 by using the GPS function. For example, this positional information D2 is expressed by the latitude and the longitude. The GPS position acquisition portion 22 generates second fusion splicing data D3 by combining the positional information D2 with the first fusion splicing data D1 acquired by the information terminal 20 via the communication portion 21. The communication portion 21 transmits the second fusion splicing data D3 including the positional information D2 to the server 40 via the communication portion 21 (refer to FIG. 1). The positional information D2 is an example of first identification information according to the present embodiment. The second fusion splicing data D3 may be transmitted every time the second fusion splicing data D3 is generated. Every particular number of pieces of second fusion splicing data D3 may be transmitted collectively, or the second fusion splicing data D3 may be transmitted collectively every time interval set in advance.

In the information terminal 30, the communication portion 31 comprises the communication module 20e such as a LAN module. The communication portion 31 transmits and receives various signals to and from the server 40 via the information communication network 50 such as the Internet. The display portion 32 displays aggregation information of fusion splicing data received from the server 40. Aggregation information will be described below in detail.

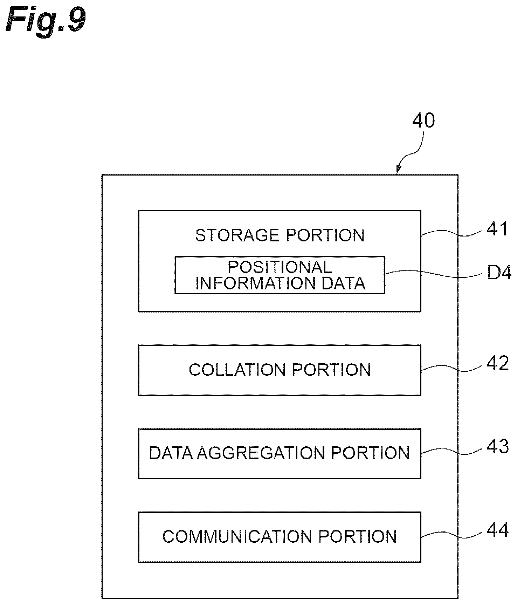

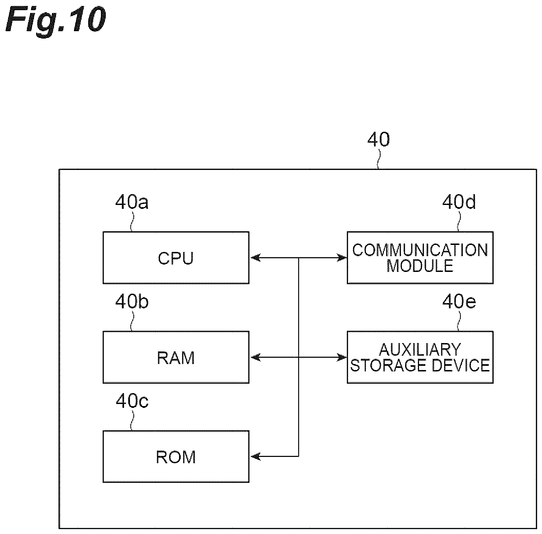

FIG. 9 is a block diagram illustrating a functional configuration of the server 40. FIG. 10 is a block diagram illustrating a hardware configuration of the server 40. As illustrated in FIG. 9, the server 40 functionally includes a storage portion 41, a collation portion 42, a data aggregation portion 43, and a communication portion 44. As illustrated in FIG. 10, the server 40 is configured to include a computer as a control unit thereof provided with hardware such as a CPU 40a, a RAM 40b, a ROM 40c, a communication module 40d, and an auxiliary storage device 40e. When these constituent elements operate in accordance with a program or the like, each of the functions of the server 40 is realized.

The storage portion 41 is a portion for retaining positional information D4 of a plurality of registered projects which have been registered in advance by a manager of the projects. For example, the positional information D4 may be expressed by the latitudes and the longitudes, and may be regions (areas) having to a certain extension. The positional information D4 is an example of second identification information according to the present embodiment. In addition to the positional information D4, for example, the storage portion 41 retains information pertaining to registered projects in advance including work period information such as scheduled date and time, lengths of lines, information of fusion splicing points, the number of fusion splicing points, request characteristics such as a splicing loss, and identification numbers (IDs) of fusion splicers scheduled to be used.

The collation portion 42 is a portion for comparing (collating) the positional information D2 included in the second fusion splicing data D3 obtained from the information terminal 20 with a plurality of pieces of positional information D4 stored in the storage portion 41. The collation portion 42 collates these with each other. When one piece of positional information D4 of the plurality of pieces of positional information D4 and the positional information D2 coincide with each other or when these conditions coincide with each other, the collation portion 42 judges that the second fusion splicing data D3 pertains to the registered project corresponding to the positional information D4 and interrelates the first fusion splicing data D1 included in the second fusion splicing data D3 with the registered project. For example, coinciding of conditions denotes a case in which the difference between the positional information D2 and the positional information D4 is within a predetermined range, a case in which the positional information D2 is at a position within an area when the positional information D4 is identified as the area, or the like.

The data aggregation portion 43 is a portion for aggregating or calculating the first fusion splicing data D1 included in the second fusion splicing data D3 for each registered project. The data aggregation portion 43 allocates the first fusion splicing data D1 for a project identified on the basis of comparison results by the collation portion 42 and aggregates the progress status and the splicing quality of the project. Specifically, the progress status denotes a proportion of the number of fusion splicing spots which have been worked to the total number of fusion splicing spots scheduled to be worked. In addition, specifically, the splicing quality denotes statistics of estimated values of splicing losses at fusion splicing spots which have been worked. The data aggregation portion 43 makes a data table for each project, for example, on the basis of aggregation results.

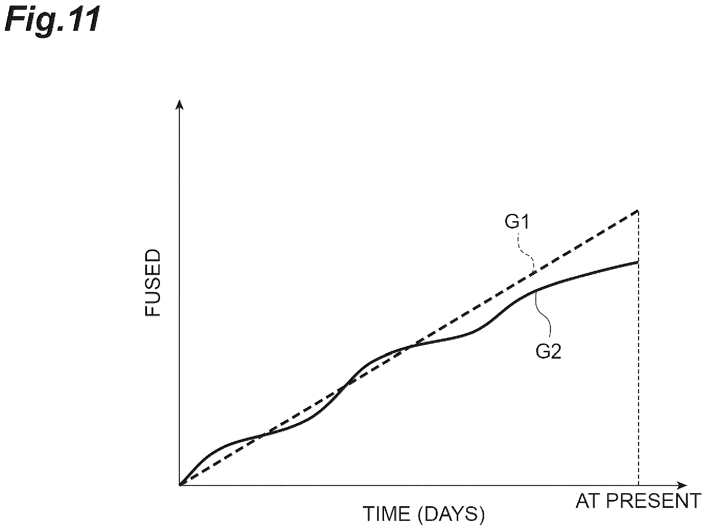

FIG. 11 is a graph conceptually showing a progress status of a project. In the same diagram, the horizontal axis indicates times, and the vertical axis indicates numbers of work spots which have been fusion-spliced. The graph G1 in the diagram shows a prescribed progress schedule. Generally, an expected degree of progress is proportional to time. The graph G2 in the diagram shows actual progress status aggregated by the data aggregation portion 43. When an actual progress status is slower than a progress schedule, there is a need for a manager of the project to accelerate the work by increasing the number of workers, or the like.

FIG. 9 will be referred to again. The communication portion 44 is a portion for performing communication with the information terminals 20 and 30 via the information communication network 50 such as the Internet. The communication portion 44 receives the second fusion splicing data D3 from the information terminal 20 via the information communication network 50. In addition, as illustrated in FIG. 1, the communication portion 44 transmits aggregation information Ta, which is aggregation data made by the data aggregation portion 43, to the information terminal 30 via the information communication network 50. For example, the aggregation information Ta is a data table. As described above, this aggregation information Ta is presented to a manager by the display portion 32 of the information terminal 30.

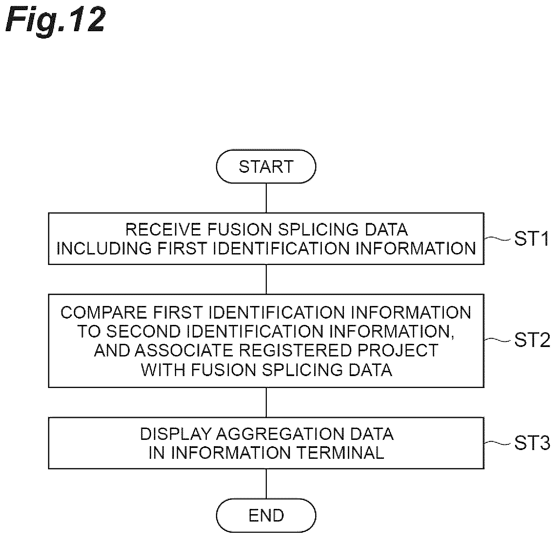

FIG. 12 is a flowchart showing the project management method according to the present embodiment. For example, this project management method can be performed using the fusion splicing system 1A of the present embodiment. First, as a first step ST1, the second fusion splicing data D3 pertaining to a fusion splicing is received from the information terminal 20, which can communicate with the fusion splicer 10A performing the fusion splicing of optical fibers, via the information communication network 50. At this time, the second fusion splicing data D3 includes the positional information D2. The positional information D2 is information for identifying a project to which the fusion splicing belongs.

Next, as a second step ST2, the positional information D2 are compared with a plurality of pieces of positional information D4 related to a registered project registered in advance. When the positional information D2 coincide with one piece of positional information D4 of the plurality of pieces of positional information D4, the first fusion splicing data D1 included in the second fusion splicing data D3 is interrelated with a registered project indicated by the positional information D4.

Subsequently, as a third step ST3, the first fusion splicing data D1 included in the second fusion splicing data D3 is aggregated or calculated for each registered project, and the aggregation information Ta is made. Further, the made aggregation information Ta is transmitted to the information terminal 30 via the information communication network 50. This aggregation information Ta is presented to a manager through the display portion 32 of the information terminal 30.

The operation and effects obtained by the fusion splicing system 1A, the server 40, the fusion splicer 10A, the information terminal 20, and the project management method of the present embodiment having the foregoing constitutions will be described. In the present embodiment, the second fusion splicing data D3 is received by the server 40 (or in the first step ST1) via the information communication network 50. The second fusion splicing data D3 includes the positional information D2 for identifying a project to which the fusion splicing of targets belongs. When the positional information D4 related to a registered project registered in advance and this positional information D2 are compared with and collated with each other by the server 40, the server 40 can easily judge which registered project the second fusion splicing data D3 belongs to. Further, the progress of the project, the splicing quality, and the like can be automatically aggregated by interrelating the second fusion splicing data D3 with the identified project. Thus, labor involved in a manager understanding the progress of the work, the splicing quality, and the like can be reduced and the timing of such understanding can be further advanced, for example, those can be immediately understood.

In the present embodiment, a project is identified using the positional information D2 of the information terminal 20 and the positional information D4 of the registered project. For example, the positional information D2 can be automatically acquired using a GPS or the like. Therefore, the positional information D2 can be easily included in the second fusion splicing data D3. In addition, since the positional information belonging to a particular project, that is, a place where fusion work is performed is predetermined, even when the fusion splicer 10A or the information terminal 20 is replaced with a different fusion splicer 10A or a different information terminal 20, for example, the positional information D2 of the different information terminal 20 can be easily included in the second fusion splicing data D3.

As in the present embodiment, the server 40 may transmit aggregation data of the aggregated first fusion splicing data D1, that is, the aggregation information Ta to the information terminal 30, and the information terminal 30 may have the display portion 32 displaying the aggregation information Ta. In this case, a manager can easily and immediately understand the progress of the work, the splicing quality, and the like aggregated by the server 40.

### (Second embodiment)

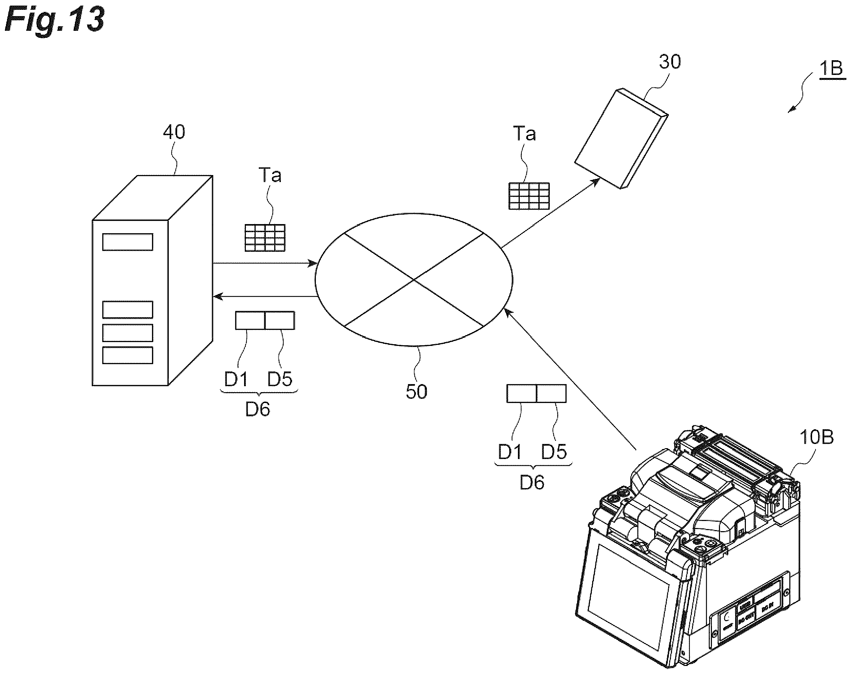

FIG. 13 is a view schematically illustrating a constitution of a fusion splicing system 1B according to another embodiment of the present invention. This fusion splicing system 1B differs from that of the foregoing embodiment in the constitution of the fusion splicer and the presence or absence of the information terminal 20. That is, the fusion splicing system 1B of the present modification example includes a fusion splicer 10B, the information terminal 30, and the server 40 but does not include the information terminal 20. Further, the fusion splicer 10B is capable of communicating with the server 40 via the information communication network 50. The constitution is otherwise similar to that of the foregoing embodiment except for the following description.

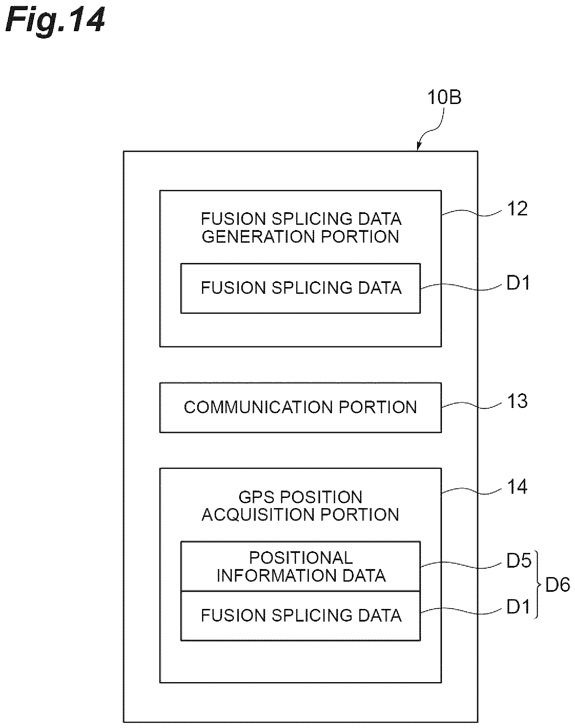

FIG. 14 is a block diagram illustrating a functional configuration of the fusion splicer 10B. The fusion splicer 10B has a hardware configuration similar to that of the foregoing embodiment. As illustrated in FIG. 14, the fusion splicer 10B functionally has the fusion splicing data generation portion 12, a communication portion 13, and a GPS position acquisition portion 14. The fusion splicing data generation portion 12 has functions similar to those of the foregoing embodiment.

The communication portion 13 transmits and receives various signals to and from the server 40 via the information communication network 50 such as the Internet. On this account, the communication portion 13 may have a wireless LAN module or may have a different communication module. The GPS position acquisition portion 14 has functions similar to those of the GPS position acquisition portion 22 of the foregoing embodiment. That is, the GPS position acquisition portion 14 acquires positional information D5 regarding the location of the fusion splicer 10B including the GPS position acquisition portion 14 using the function of the GPS. For example, this positional information D5 is expressed by the latitude and the longitude. The GPS position acquisition portion 14 combines the positional information D5 with the first fusion splicing data D1 generated in the fusion splicing data generation portion 12. Third fusion splicing data D6 including the positional information D5 is transmitted to the server 40 via the communication portion 13. The positional information D5 is an example of the first identification information in the present embodiment.

In the server 40 of the present embodiment, the communication portion 44 communicates with the fusion splicer 10B via the information communication network 50. The communication portion 44 receives the third fusion splicing data D6 from the fusion splicer 10B via the information communication network 50. In addition, in the collation portion 42 of the present embodiment, the positional information D5 included in the third fusion splicing data D6 obtained from the fusion splicer 10B and the plurality of pieces of positional information D4 stored in the storage portion 41 are compared with and collated with each other. The collation portion 42 collates these with each other. When one piece of positional information D4 of the plurality of pieces of positional information D4 and the positional information D5 coincide with each other or when these conditions coincide with each other, the collation portion 42 judges that the third fusion splicing data D6 pertains to the registered project corresponding to the positional information D4 and interrelates the first fusion splicing data D1 included in the third fusion splicing data D6 with the registered project.

As in the present embodiment, the fusion splicer 10B may generate the positional information D5, and the third fusion splicing data D6 including the positional information D5 may be transmitted from the fusion splicer 10B to the server 40. Even with such a configuration, the same operation and effects as in the foregoing embodiment can be obtained.

The fusion splicing system according to the present invention is not limited to the embodiments described above, and various other deformations can be made. For example, in each of the foregoing embodiments, positional information is used as identification information for identifying a project. Identification information is not limited thereto, and various other pieces of information can be utilized. For example, identification information (ID) of a worker performing fusion splicing may be utilized as identification information. In such a case, in the first embodiment, data related to the ID of a worker handling the fusion splicer 10A capable of communicating with the information terminal 20 is included, as the first identification information, in the second fusion splicing data D3 transmitted from the information terminal 20 to the server 40. Further, the ID of a worker belonging to the project is registered in advance in the server 40 as the second identification information. In the server 40, a worker's ID included in the second fusion splicing data D3 and worker's IDs of a plurality of registered projects registered in advance are compared with and collated with each other, and aggregation is performed by interrelating the first fusion splicing data D1 included in the second fusion splicing data D3 with the coincident project. In the second embodiment, data related to the ID of a worker handling the fusion splicer 10B is included, as the first identification information, in the third fusion splicing data D6 transmitted from the fusion splicer 10B to the server 40. Further, the ID of a worker belonging to the project is registered in advance in the server 40 as the second identification information. In the server 40, a worker's ID included in the third fusion splicing data D6 and worker's IDs of a plurality of registered projects registered in advance are compared with and collated with each other, and aggregation is performed by interrelating the first fusion splicing data D1 included in the third fusion splicing data D6 with the coincident project.

Alternatively, the ID of a fusion splicer used for fusion splicing may be utilized as identification information. In such a case, in the first embodiment, data related to the ID of the fusion splicer 10A capable of communicating with the information terminal 20 is included, as the first identification information, in the second fusion splicing data D3 transmitted from the information terminal 20 to the server 40. Further, the ID of the fusion splicer 10A belonging to the project is registered in advance in the server 40 as the second identification information. In the server 40, the ID of the fusion splicer 10A included in the second fusion splicing data D3 and the IDs of the fusion splicers of a plurality of registered projects registered in advance are compared with and collated with each other, and aggregation is performed by interrelating the first fusion splicing data D1 included in the second fusion splicing data D3 with the coincident project. In the second embodiment, data related to the ID of the fusion splicer 10B is included, as the first identification information, in the third fusion splicing data D6 transmitted from the fusion splicer 10B to the server 40. Further, in the server 40, the ID of the fusion splicer 10B belonging to the project is registered in advance as the second identification information. In the server 40, the ID of the fusion splicer 10B included in the third fusion splicing data D6 and the IDs of the fusion splicers of a plurality of registered projects registered in advance are compared with and collated with each other, and aggregation is performed by interrelating the first fusion splicing data D1 included in the third fusion splicing data D6 with the coincident project.

For example, according to the configurations of these modification examples, identification information for identifying a project can be easily included in the second fusion splicing data D3 and the third fusion splicing data D6.

### Reference Signs List

1A, 1B Fusion splicing system
2 Casing
3 Fusion unit
3a Optical fiber holder
3b Fiber positioning portion
3c Discharging electrode
4 Heater
5 Monitor
6 Windshield cover
6a Side surface
6b Introduction port
10A, 10B Fusion splicer
11 Communication portion
12 Fusion splicing data generation portion
13 Communication portion
14 GPS position acquisition portion
20, 30 Information terminal
21, 31 Communication portion
22 GPS position acquisition portion
32 Display portion
40 Server
41 Storage portion
42 Collation portion
43 Data aggregation portion
44 Communication portion
50 Information communication network
D1 First fusion splicing data
D3 Second fusion splicing data
D6 Third fusion splicing data
D2, D4, D5 Positional information
Ea Transmission request
Ta Aggregation information
ST1 First step
ST2 Second step
ST3 Third step

## Claims

1. A fusion splicing system comprising:
a fusion splicer configured to perform fusion splicing of optical fibers; and
a server configured to receive fusion splicing data pertaining to the fusion splicing from an information terminal capable of communicating with the fusion splicer, or the fusion splicer via a communication network,
wherein the fusion splicing data includes first identification information for identifying a project to which the fusion splicing belongs, and
wherein the server retains second identification information related to a registered project registered in advance, compares the first identification information with the second identification information, and interrelates the fusion splicing data with the registered project indicated by the second identification information when the first identification information coincides with the second identification information.

2. The fusion splicing system according to claim 1,
wherein the first identification information is positional information of the fusion splicer or the information terminal, and
wherein the second identification information is positional information belonging to the registered project.

3. The fusion splicing system according to claim 1,
wherein the first identification information is identification information of a worker handling the fusion splicer, and
wherein the second identification information is identification information of a worker belonging to the registered project.

4. The fusion splicing system according to claim 1,
wherein the first identification information is identification information of the fusion splicer, and
wherein the second identification information is identification information of a fusion splicer belonging to the registered project.

5. The fusion splicing system according to any one of claims 1 to 4,
wherein the server transmits aggregation data of the fusion splicing data aggregated for each project to an information terminal different from the information terminal, and
wherein the different information terminal has a display portion displaying the aggregation data.

6. A server comprising:
a communication portion configured to receive fusion splicing data pertaining to fusion splicing of optical fibers from an information terminal capable of communicating with a fusion splicer performing the fusion splicing or the fusion splicer via a communication network, the fusion splicing data including first identification information for identifying a project to which the fusion splicing belongs;
a storage portion configured to retain second identification information related to a registered project registered in advance; and
a collation portion configured to compare the first identification information with the second identification information and interrelate the fusion splicing data with the registered project indicated by the second identification information when the first identification information coincides with the second identification information.

7. The server according to claim 6,
wherein the first identification information is positional information of the fusion splicer or the information terminal, and
wherein the second identification information is positional information belonging to the registered project.

8. The server according to claim 6,
wherein the first identification information is identification information of a worker handling the fusion splicer, and
wherein the second identification information is identification information of a worker belonging to the registered project.

9. The server according to claim 6,
wherein the first identification information is identification information of the fusion splicer, and
wherein the second identification information is identification information of a fusion splicer belonging to the registered project.

10. A fusion splicer performing fusion splicing of optical fibers, the fusion splicer comprising:
a data generation portion configured to generate fusion splicing data pertaining to the fusion splicing; and
a communication portion configured to transmit the fusion splicing data to a server via a communication network,
wherein the fusion splicing data includes first identification information for identifying a project to which the fusion splicing belongs, and
wherein the server compares the first identification information with second identification information related to a registered project registered in advance and interrelates the fusion splicing data with the registered project indicated by the second identification information when the first identification information coincides with the second identification information.

11. The fusion splicer according to claim 10,
wherein the first identification information is positional information of the fusion splicer, and
wherein the second identification information is positional information belonging to the registered project.

12. An information terminal capable of communicating with a fusion splicer performing fusion splicing of optical fibers, the information terminal comprising:
a communication portion configured to transmit fusion splicing data pertaining to the fusion splicing to a server via a communication network,
wherein the fusion splicing data includes first identification information for identifying a project to which the fusion splicing belongs, and
wherein the server compares the first identification information with second identification information related to a registered project registered in advance and interrelates the fusion splicing data with the registered project indicated by the second identification information when the first identification information coincides with the second identification information.

13. An information terminal comprising:
a communication portion configured to receive aggregation data of aggregated fusion splicing data from a server, the fusion splicing data pertaining to fusion splicing of a fusion splicer performing the fusion splicing of optical fibers; and
a display portion configured to display the aggregation data,
wherein the aggregation data is data of the fusion splicing data aggregated for each project by comparison between first identification information and second identification information, the first identification information is included in the fusion splicing data for identifying a project to which the fusion splicing belongs, and the second identification information is related to a registered project registered in advance.

14. A project management method comprising steps of:
receiving fusion splicing data pertaining to fusion splicing of optical fibers from an information terminal capable of communicating with a fusion splicer performing the fusion splicing or the fusion splicer via a communication network, the fusion splicing data including first identification information for identifying a project to which the fusion splicing belongs; and
comparing the first identification information with second identification information related to a registered project registered in advance, and interrelating the fusion splicing data with the registered project indicated by the second identification information when the first identification information coincides with the second identification information.

15. The project management method according to claim 14,
wherein the first identification information is positional information of the fusion splicer or the information terminal, and
wherein the second identification information is positional information belonging to the registered project.
